# EUROPEAN PATENT SPECIFICATION

(11) **EP 3 927 081 B1**
(45) Date of publication and mention of the grant of the patent: **27.08.2025**
(21) Application number: 21178112.5
(22) Date of filing: 08.06.2021
(51) Int. Cl.: H04W 72/12, H04L 5/00, H04W 72/121, H04W 72/20, H04W 84/18

(54) **RESOURCE SCHEDULING SYSTEM FOR A WIRELESS COMMUNICATION NETWORK**
SYSTEM ZUR RESSOURCENPLANUNG FÜR EIN DRAHTLOSKOMMUNIKATIONSNETZWERK
SYSTÈME DE PLANIFICATION DE RESSOURCES POUR UN RÉSEAU DE COMMUNICATION SANS FIL

(30) Priority: 10.06.2020 FI 20205602
(43) Date of publication of application: 22.12.2021
(73) Proprietor: Wirepas Oy, 33720 Tampere (FI)
(72) Inventor: PIRSKANEN, Juho, 36200 KANGASALA (FI); KASEVA, Ville, 33720 TAMPERE (FI)
(74) Representative: Berggren Oy

(56) References cited:
- US-A1- 2016 381 596
- JUSSI NUMMINEN ET AL: "Wirepas Input to ETSI TR 103 665", vol. 802.11 ETSI ERMTG11, 6 November 2019 (2019-11-06), pages 1 - 4, XP068155488, Retrieved from the Internet <URL:http://www.ieee802.org/11/private/ETSI_documents/ERMTG11/05-CONTRIBUTIONS/2019/ERMTG11(19)000019_Wirepas_Input_to_ETSI_TR_103_665.docx> [retrieved on 20191106]
- "DECT-2020 New Radio (NR); Part 4: MAC layer; Release 1", no. V0.0.7, 31 May 2020 (2020-05-31), pages 1 - 47, XP014368702, Retrieved from the Internet <URL:docbox.etsi.org/DECT/DECT/70-Draft/00319/DECT-00319v007.docx> [retrieved on 20200531]

## Description

### Technical field

The application relates generally to a resource scheduling system for a wireless communication network.

### Background

Typically, in radio systems where access to radio resources are controlled, transmission resources are either contention-based, where all radio devices content to the radio resource, or scheduled (dedicated) resources, where each radio resource is assigned to a specific device to either receive or transmit data.

The benefit of contention-based channel access to the radio resources is that it requires a very limited amount of signalling. However, when the resources are increasingly used, the collision probability increases and this reduces an overall throughput obtained via the resources. The basic ALOHA, or slotted ALOHA, protocol is the common way of using such contention-based resources and its system throughput is capped approx. 20-40% of the maximum capacity depending whether it is used the unslotted or slotted version. Other contention-based protocols, e.g. Carrier-Sense Multiple Access with Collision Avoidance (CSMA-CA), increase the performance, but still limit the maximum achievable performance in view of the maximum capacity.

The most well-known radio system for operating mainly with the contention-based radio access are Wireless Local Area Network (WLAN) systems, e.g. Wi-Fi systems.

The benefit of scheduled (dedicated) resources is that the resources are only used by the specific device and, thus, there are no collisions. This allows higher resource utilization when, basically, the resources can be used up to 100%. In addition, a better energy-efficiency is achieved when there are no collisions and re-transmission needs are minimized. However, the drawback is that the resources should be requested and an assignment should be signalled explicitly, which cause a significantly higher signalling overhead compared to the contention-based resources. This signalling reduces the overall effective resource consumption significantly as increases latency to transmit an actual data and increases a device power consumption. The problem becomes more significant, if required resources are small, i.e. an individual amount of traffic is small, or seldom, whereupon it increases a relative overhead of resource assignment to significant level.

The well-known systems using the scheduled resources are the Long-Term Evolution (LTE) and cellular systems, where individual scheduling commands are sent to individual user devices and these commands define which user device shall transmit or receive and on which resources these transmission will happen.

Other known systems are introduced in technical specification ETSI TS 103 636-4 V0.0.8 (2020-06), DECT-2020 New Radio (NR), Part 4: MAC layer, Release #1, technical specification ETSI ERM TG11, Wirepas Input to ETSI TR 103665, and in published patent application US 2016/0381596.

### Summary

One object of the invention is to withdraw the drawbacks of known solutions and to provide a configuration (allocation) and separate assignment of radio transmission resources in a wireless radio communication network, where radio communication devices only receive and transmit the assigned resources. This improves a capacity of network and power consumption of devices. The separation of dedicated resource configuration signalling and resource assignment signalling provides an efficient overall signalling, i.e. a minimized signalling overhead, for wireless communication networks, where the resource configuration changes seldom.

One object of the invention is fulfilled by providing the scheduling system, communication device, methods, computer program, and computer-readable medium according to the independent claims.

Embodiments the invention are disclosed in the scheduling system, communication device, methods, computer program, and computer-readable medium according to the independent claims.

One resource scheduling system for a wireless communication network comprises a first communication device and a second communication device. The first and second communication devices belong to a group of plurality of communication devices of the network. Each communication device in the group of plurality of the communication devices is configured to provide a bi-directional radio communication with at least one of the plurality of the communication devices. The first communication device is configured to send a transmission resource configuration to rest of the plurality of the communication devices. The first communication device is further configured to broadcast separately a transmission resource assignment to the rest of the plurality of the communication devices.

One resource scheduling method for a wireless communication network comprises a step of presenting at least first and second communication devices belonging to a group of plurality of communication devices of the network. The method further comprises a step of providing, by each communication device in the group of plurality of the communication devices, a bi-directional radio communication with at least one of the plurality of the communication devices. The method further comprises a step of sending, by the first communication device, a transmission resource configuration to rest of the plurality of the communication devices. The method further comprises a step of broadcasting, by the first communication device, separately a transmission resource assignment to the rest of the plurality of the communication devices.

One wireless communication device for a wireless communication network comprises a controller and a data transferer. The controller is configured to present a group of plurality of wireless communication devices in the wireless communication network. The data transferer is configured to provide a bi-directional radio communication with at least one another wireless communication device belonging to the group of plurality of the communication devices. The data transferer is configured to send a transmission resource configuration to rest of the plurality of the communication devices. The data transferer is further configured to broadcast separately a transmission resource assignment to the rest of the plurality of the communication devices in order to schedule resources in the network.

One resource scheduling method for a wireless communication device comprises a step of presenting, by a controller of the communication device, a group of plurality of wireless communication devices in a wireless communication network. The method further comprises a step of providing, by a data transferer of the communication device, a bi-directional radio communication with at least one another wireless communication device belonging to the group of plurality of the communication devices. The method further comprises a step of sending, by the data transferer, a transmission resource configuration to rest of the plurality of the communication devices. The method further comprises a step of broadcasting, by the data transferer, separately a transmission resource assignment to the rest of the plurality of the communication devices in order to schedule resources in the network.

One computer program comprises instructions, which, when the computer program is executed by a computer, which is in accordance with the previously explained wireless communication device, cause the computer to carry out at least the steps of the previously explained resource scheduling method.

One tangible, non-volatile computer-readable storage medium comprises the computer program, which is in accordance with the previously explained computer program.

### Brief description of the figures

The embodiments of the invention are explained with reference to the following figures:
- Fig. 1: presents a wireless communication environment for a resource scheduling system
- Fig. 2a: presents an example format for a resource configuration information element
- Fig. 2b-2c: present another format for the resource configuration information element and definitions of its fields
- Fig. 2d: presents an example format of association acknowledged response
- Fig. 3a-3f: present different example formats for a resource assignment information element
- Fig. 4: presents parts of wireless communication device

### Detailed description of the figures

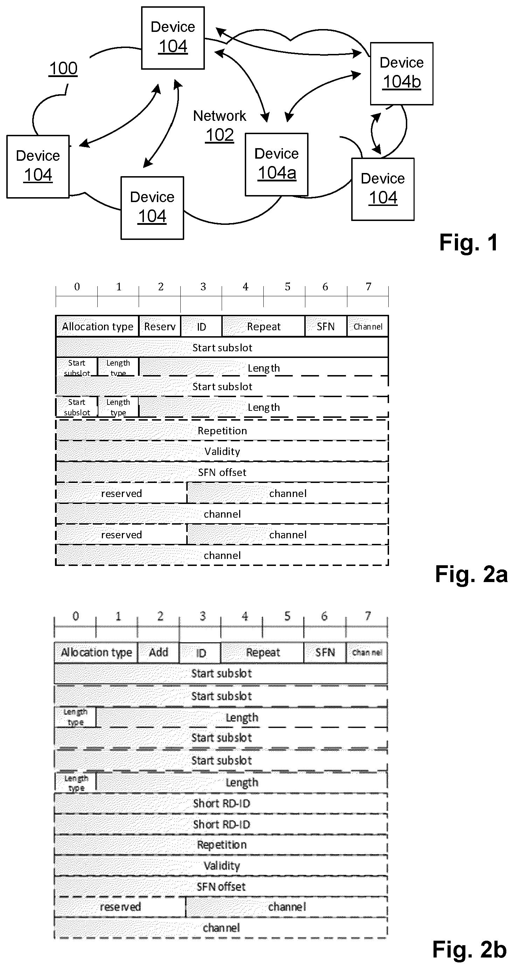

Fig. 1 presents an environment, wherein a transmission resource scheduling system 100 may be applied.

The environment comprises a wireless radio communication network (system) 102, which comprises a plurality of wireless radio communication devices (nodes) 104, 104a, 104b. The devices 104, 104a, 104b operate on a same spectrum at a same geo-graphical area, e.g. within the example environment. The usage of same spectrum enable a bi-directional radio communication is between the devices 104, 104a, 104b, i.e. radio transmissions transmitted by one device 104, 104a, 104b of network 102 may be received by another device 104, 104a, 104b of network 102 and vice versa.

The system 100 may be applied to any wireless radio communication network 102 that uses frequent signaling of node identifiers (identities, IDs) in packet transmissions. Preferably, the system 100 may be applied in wireless communication networks 102 complying Digital European Cordless Telecommunications (DECT-2020) standard. Some non-limiting examples to which the system 100 may be applied may comprise, but is not limited to, Bluetooth Low Energy (BLE) mesh network, Thread network, Zigbee network, Public Land Mobile Network (PLMN), WLAN network, cellular network, or wireless mesh network, e.g. wireless sensor network, and/or any other wireless networks.

Typically, the devices 104, 104a, 104b of the network 102 are capable to receive transmissions with one radio technology, e.g. BLE transmissions or WLAN transmissions, which transmissions are all from the same network 102. However, at least one of the devices 104, 104a, 104b of network 102 may be capable to re-ceive transmissions with at least two radio technologies, e.g. BLE transmissions and WLAN transmissions, which transmissions are all from the same network 102.

The DECT-2020 is radio access technology developed by ETSI. The DECT-2020 supports massive machine-type communication (mMTC) and ultra-reliable low latency communication (URLLC). On Physical (PHY) layer, the key technology components of the DECT-2020 are Orthogonal frequency-division multiplexing (OFDM), adaptive modulation and coding schemes (MCS), Modern Channel cod-ing methods (Turbo, LDPC, Convolutional coding), HARQ for both scheduled and contention based transmissions, and a support of multi-antenna transmissions with different Multiple-Input and Multiple-Output (MIMO) streams. On Medium access (MAC) layer and from system aspects, the key technology components of the DECT-2020 are a support of high number of Internet of Things (IoT) sensors, actuators, and other industrial applications; support of Mesh network topology, support of URLLC communication with very short delay (typical application may be wireless micro-phones); operation on frequencies that are license exempt; and support of multi-ple overlapping non-coordinated networks with cognitive radio capabilities to share spectrum resources between multiple networks.

A scheduling method is used for scheduling radio transmission resources in the previously explained system and network 100, 102. The method is explained mainly by using two devices 104a, 104b, i.e. a first wireless radio communication device 104a and a second wireless radio communication device 104b, which belong to the network 102 and operate in the system 100. These two devices 104a, 104b form a group (cluster) of devices 104a, 104b. The network 102 may also comprise a plurality of other devices 104, which also participate to a formation of group, whereupon the group comprises devices 104, 104a, 104b.

Each device 104, 104a, 104b is able to provide, by means of its data transferer 426, the bi-directional radio communication with at least one other device 104, 104a, 104b, i.e. to transmit at least one data packet 208 to other device(s) 104, 104a, 104b and to receive at least one data packet 208 from the other device(s) 104, 104a, 104b, in the network 102 as previously has been explained. In other words, each device 104, 104a, 104b may act as a transmitter and/or as a receiver.

In the method, the device 104a is acting as a transmitter and the device 104b is acting as receiver at the start and these roles change between the devices 104a, 104b during their mutual communication. Preferably, the transmitter and the receiver devices 104, 104a, 104b may be identical with each other. However, the invention is not limited to that.

At the start of method, the device 104a broadcasts, by means of its data transferer 426, a beacon (message) to allow an association with other device(s) 104, 104b. Before or after the device 104a broadcasts its beacon, it may detect, by means of its data transferer 426, the environment, in order to listen a radio communication of other devices 104, 104b and to receive beacons from the other device(s) 104, 104b similarly as these other devices 104, 104b operate.

When one of the other devices 104, 104b, which is in this example the device 104b, receives, by means of its data transferer 426, the broadcasted beacon from the device 104a, the device 104b determines, by means of its controller 424, an association request (message), if it has an intention to associate to the device 104a and nothing prevents the association from its point of view. Then, the device 104b sends (an unicast transmission), by means of its data transferer 426, the determined association request to device 104a.

When the device 104a receives, by means of its data transferer 426, the association request from the device 104b and nothing prevents the association from its point of view, the device 104a determines (generates), by means of its controller 424, an association acknowledged response (message), which completes the association between the devices 104a, 104b. The device 104a includes, by means of its controller 424, a transmission resource configuration (transmission resource allocation) into the association acknowledged response as a part of the association acknowledged response. The included resource configuration comprises at least information about timings (validity time) of resources, at least one frequency channel of the resources, and an amount of the resources.

Fig. 2a presents an example of resource configuration (RC, resource allocation) information element, which is used for informing its receiver, e.g. the device 104, 104b, about the configuration of transmission resources in the previously explained system 100.

The RC information element may be included into the association acknowledged response as previously has been explained. It may also be included into other type of messages, e.g. a cluster beacon (message) or other broadcast message, if the resource configuration changes during the time the devices 104, 104a, 104b are already associated.

The RC information element presents a single transmission resource with two parts, where a first part may be used for transmitting and receiving, and a second part can be used for receiving and transmitting, e.g. for a data-acknowledgement communication between the devices 104a, 104b to an uplink direction and a downlink direction, when the device 104a operates as a cluster head of cluster and the device 104b as a cluster member of cluster. The RC information element also presents how the resource is repeated to allow a configuration of multiple resources and at least one channel used for the resources.

The direction, i.e. the uplink and downlink, and the assignment of resources presented by the RC information element are assigned dynamically using a below explained resource assignment.

The RC information element comprises e.g. at least following fields: Repeat (size 2 bits), SFN (1 bit), Channel (1 bit), Start subslot 1 (9 bits), Length type 1 (1 bit), Length 1 (6 bits), Start subslot 2 (9 bits), Length type 2 (1 bit), Length 2 (6 bits), Repetition (8 bits), Validity (8 bits), SFN offset (8 bits), Channel 1 (13 bits), and Channel 2 (13 bits). The number of bits in each field is an example and it is possible to use other number of bits in these fields.

The bits in the Repeat field may be provided so that value of bits 00 indicates that the resource configuration is a one-shot (disposable) allocation, and the Repetition and Validity fields are not present; value 01 indicates that the resource configuration repeating in following frames with periodicity is indicated in the Repetition field, until the validity indicated in the Validity field expires; value 10 indicates that the resource configuration repeating in following subslots with periodicity is indicated in the Repetition field, until validity indicated in the Validity field expires; and value 11 indicates that the it is reserved, whereupon the value shall be ignored by the receiver device 104, 104b.

The single bit in the SFN field may be provided so that value 0 indicates that the resource configuration is immediately valid from this frame onwards, and the SFN offset field is not present in the RC information element, and value 1 indicates that the resource configuration is valid from the frame indicated in the SFN offset field onwards.

The single bit in the Channel field may be provided so that value 0 indicates that the resource resource configuration is valid for the channel, where the RC information element is received, and the Channel fields 1 and 2 are not present in the RC information element; and value 1 indicates that the channel, where the resource configuration is valid, is indicated in the Channel fields 1 and 2 of the RC information element.

The bits in the Start subslot 1 field indicate a first subslot, where the first part of resource configuration is valid in the frame. The single bit in the Length type 1 field indicate whether the length of first part of resource configuration is indicated in subslots or slots. For example, when the Length type 1 field is set to value 0, the length is given in the subslots. The bits in the Length 1 field indicate the length of first part of resource configuration in the subslots or slots. The transmitter device 104a may split the resource to multiple physical layer packet transmissions.

The bits in the Start subslot 2 field indicate the first subslot where the second part of resource configuration is valid in the frame. The single bit in the Length type 2 field indicate whether the length of second part of resource configuration is indicated in subslots or slots. For example, when the Length type 1 field is set to value 0, the length is given in the subslots. The bits in the Length 2 field indicate the length of second part of resource configuration in the subslots or slots. The transmitter device 104a may split the resource to multiple physical layer packet transmissions.

The bits in the Repetition field indicate the repetition of resource configuration (first part and second part) in the frames or sublots.

The bits in the Validity field indicate how long the resource configuration is valid in frames. The value 0xFF indicates that the resource configuration is permanent and valid until explicitly removed.

The bits in the SFN offset field indicate that a resource allocation (configuration) is valid from the frame indicated in SFN offset field onwards.

The bits in the Channel 1 and Channel 2 fields indicates an absolute carrier centre frequency of the first part and second part respectively in the resource allocation.

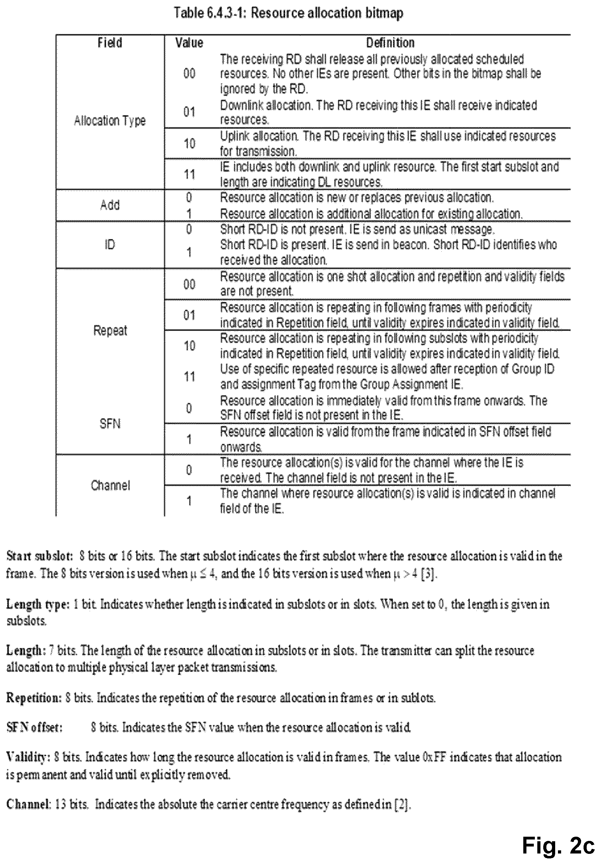

Fig. 2b presents another example of RC information element, which is used for informing its receiver, e.g. the device 104, 104b, about the configuration of transmission resources in the previously explained system 100 and fig. 2c presents definitions of fields of this RC information element similarly as explained in context of the previous figure.

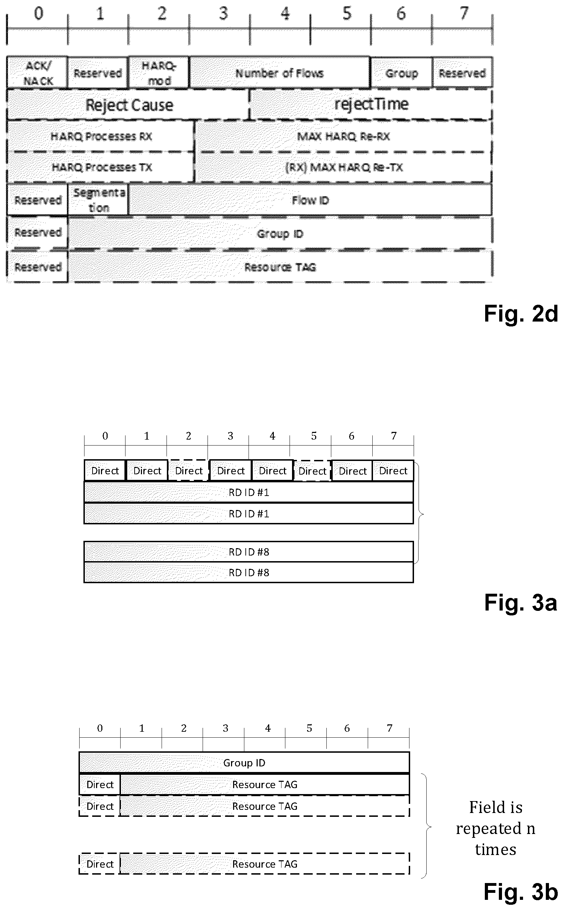

Fig. 2d presents an example format of determined association acknowledged response, which indicates a below explained resource tag and an group identifier, i.e. Resource tag and Group ID fields, when the resource assignment is carried out by means of the resource tag(s). This makes possible to form several groups by means of group identifiers (Group ID) and each group may comprise several devices 104, 104b.

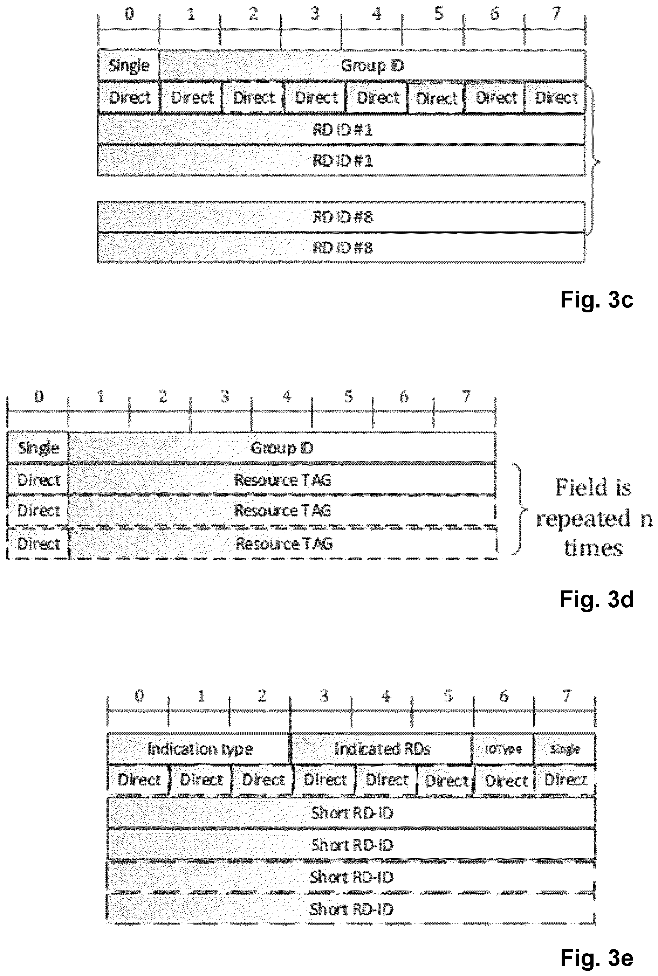

The Group ID field has been determined as 7 bits long and it has been indicated a single bit in a Reserved field in the same octet, whereupon it is possible to use this single bit in the resource assignment of fig. 3c-3f.

Then, in the method, the device 104a sends (an unicast transmission), by means of its data transfererer 426, the association acknowledged response, which includes the resource configuration, to the device 104b, as a response to the association request, so that the association will be completed between the devices 104a, 104b. Additionally, the device 104b is now aware of available transmission resources after the device 104b has received the association acknowledged response by means of its data transferer 426.

Similarly, the device 104a sends, by means of its data transferer 426, an association acknowledged response with the included resource configuration to other devices 104 in the network 102, if any of those devices 104 requests, by means of its data transferer 426, the association and there is nothing what prevents such.

The associated devices 104, 104a, 104b form the group, a cluster, that comprises the device 104a, which operates as a cluster head; the device 104b as a cluster member; and at least one other device 104, if such has associated to the device 104a, as a cluster member.

After the association and the transmission of resource configuration, the device 104a observes, by means of its data transferer 426, the use of resources, i.e. an amount of messages what each associated device 104, 104b in the cluster sends and receives by means of the data transferer 426, in order to determine, by means of its controller 424, a resource need of each device 104, 104b or to determine, by means of its controller 424, if some associated device(s) 104, 104b does not use its all resources, which means that in such case the associated device(s) 104, 104b has at least one unused resource. The observation, which is carried out by the device 104a, comprises also a reception of an additional resource request (message) by means of the data transferer 426 from at least one device 104, 104b, which belongs to the cluster, whereupon the device 104a studies, by means of its controller 424, a content of received additional resource request in order to determine, by means of its controller 424, the additional resource need of the associated device(s) 104, 104b.

If the observation indicates that at least one of device(s) 104, 104b in the cluster needs more resources than it has now or there exists unused resource(s) in the cluster, or other device 104 informs additional resources to the device 104, the device 104a changes, by means of its controller 424, the resource configuration. Then, the device 104a broadcasts, by means of its data transferer 426, the changed (new) resource configuration to the device(s) 104, 104b as previously has been explained, if the change occurs during the existing association(s) of device(s) 104, 104b.

Next, in the method, after the resource configuration has been transmitted to the device 104b, the device 104a determines (generates), by means of its controller 424, a beacon (message), e.g. a cluster beacon, or other broadcast message, which is listened by all devices 104, 104b of the cluster. The device 104a includes, by means of its controller 424, a transmission resource assignment, which inform about available recources and when these resources should be used to the devices 104, 104b, into the beacon as a part of the beacon. The included resource assignment comprises at least an assignment information, which indicates which part of the resources are assigned to which device 104, 104b in the cluster, and a direction information, which indicates whether the assigned recource part is meant to the uplink direction or the downlink direction.

The device 104a may assign, by means of its controller 424, the resources evenly or unevenly for the devices 104, 104b in the resource assignment. It may leave at least one of devices 104, 104b in the cluster without resources temporarily, if it considers it relevant, and it may assign additional recources for at least one device 104, 104b in the cluster respectively.

Fig. 3a presents an example of resource assignment (RA) information element, which is used for informing its receiver(s), e.g. the device(s) 104, 104b, about the resource assignment in the previously explained system 100, if the system 100 uses the short RD IDs.

The RA information element, i.e. the resource assignment, may be included into the beacon or other broadcast message as previously has been explained.

The RA information element comprises e.g. at least following fields: Direction (Direct) fields and RD ID fields.

The single bit in each Direction field may be provided so that it indicate whether a dedicated resource is an uplink resource, i.e. to transmit data and to receive acknowledgement in a view point of cluster member, or a downlink resource, i.e. to receive data and to transmit acknowledgement in the view point of cluster member. There is one direction bit per an assigned resource. The direction bits may be mapped to the resource configuration so that a first bit indicates the direction of first resource in the resource configuration, a second bit indicates the direction of second resource in the resource configuration, and so on.

The bits in the Short RD ID fields (list) indicate the RD IDs of cluster members to which the dedicated resources are assigned to. There is one short RD ID per assigned resource. The devices 104, 104b, which operate as cluster members, transmit their short RD IDs to the device 104a, which operate as a cluster head, during the association. It is assumed that the short RD IDs are unique for the devices 104, 104a, 104b in a radio neighborhood. The RD IDs may be mapped to the resource configuration so that a first RD ID in the list is assigned for the first resource in the resource configuration, a second RD ID in the list is assigned for the second resource in the resource configuration, and so on.

In addition, a specific short RD ID value, e.g. 0xFFFF, may be reserved to indicate that a dedicated resource is assigned as broadcast resource, e.g. for a downlink broadcast from the device 104a, the cluster head, to all associated devices 104, 104b, which are the cluster members.

Fig. 3b presents another example of RA information element, which is used for informing its receiver(s), e.g. the device(s) 104, 104b, about the resource assignment in the previously explained system 100 when the system 100 uses recource tags, which reduces a size of RA information element when compared to the RA information element of the previous figure.

The RA information element, i.e. the resource assignment, may be included into the beacon or other broadcast message as previously has been explained.

The RA information element comprises e.g. at least following fields: Group ID, and Directions (Direct, 1 bit) and Resource TAGs (7 bits).

The bits in the Group ID field indicate an identifier (ID) of group to which the resources are assigned. The group ID is assigned to the device 104, 104a, 104b e.g. during association and it allows a member amount to be larger than allowed by the size of resource tag, which has been explained below.

The bits in the list of Directions and Resource TAG fields (octets), where the single bit in each Direction field indicate whether a dedicated resource is an uplink resource, i.e. to transmit data and to receive acknowledgement in a view point of cluster member, or a downlink resource, i.e. to receive data and to transmit acknowledgement in the view point of cluster member.

The direction bit relates to a resource tag following the direction bit. The bits in the Resource TAG field indicate an ID that is allocated to a cluster member device 104, 104b during the association by the cluster head device 104a. Both the cluster head device 104a and associated cluster member device 104, 104b keep a mapping of the resource tag to short RD ID in their memory 432 as long the device 104, 104b is associated to the cluster, i.e. acting as a cluster member. Once the device 104, 104b disassociates or is removed from the cluster, e.g. due to a timeout, the cluster head device 104a can re-assign the resource tag value to a new device 104, 104b during a new association.

The list of Directions and Resource TAG fields may be mapped to the resource configuration so that the first octet indicates the direction, via the direction bit, and the device 104, 104b (member) assignment, via the resource tag, of first resource in the resource configuration, the second octet tells the direction, via the direction bit, and the device 104, 104b assignment, via the resource tag, of second resource in the resource configuration, and so on.

In addition, a specific resource tag value, e.g. 0x7F, may be reserved to indicate that a dedicated resource is assigned as broadcast resource, e.g. for a downlink broadcast from the device 104a, the cluster head, to all associated devices 104, 104b, the cluster members.

Fig. 3c and 3e present another examples of RA information element, which are used for informing its receiver(s) about the resource assignment in the previously explained system 100, when the system 100 uses the short RD IDs and the RA information element comprises the single bit presented in the context of fig. 2d.

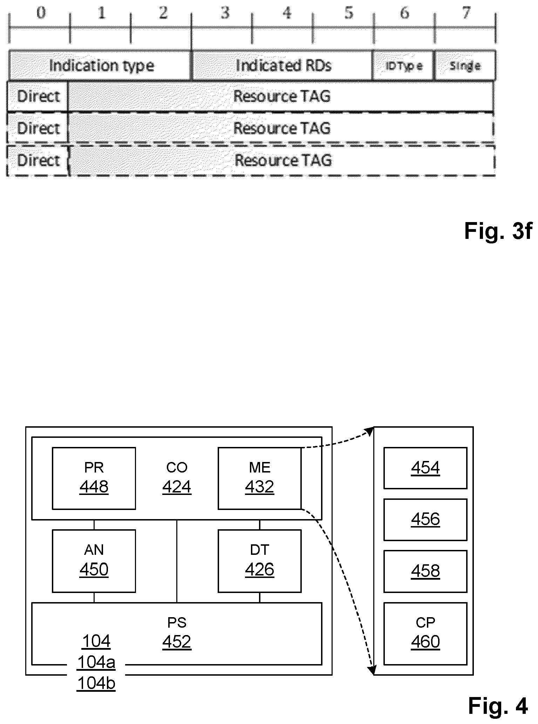

Fig. 3d and 3f present another examples of RA information element, which are used for informing its receiver(s) about the resource assignment in the previously explained system 100, when the system 100 uses the recource tags and the single bit presented in the context of fig. 2d.

The single bit (indicator) indicates in the RA information elements of fig. 3c-3f, when its value has been set to 1, that all repetitions are given to single devices 104, 104b that have the signalled the Group ID and Resource TAG. When the value of single bit is set to 0, there is multiple Resource TAGs present and a position of Resource TAG gives an index number of the repeated resource.

An Indication type field in the elements of fig. 3e and 3f indicates whether it is a paging, random access response, or resource assignment. If the elements are indicated as resource assignments, a ID Type field may indicate whether Direct bits are used separately in the case of short RD IDs or whther it is used resource tags.

The use of run-time allocated tags optimizes resource assignment signalling in the system 100 and its method.

Then, in the method, the device 104a broadcasts, by means of its data transfererer 426, the beacon, which includes the resource assignment, separately from the resource configuration to the device(s) 104, 104b of the cluster, whereupon, after a reception of broadcasted beacon by means of the data transferer 426 and a study of its content by means of the controller 424, each device 104, 104b in the cluster is aware of assigned transmission resources, and starts to transmit and receive, or vice versa, by means of its data transferer 426, data (messages) in accordance with the known, separately received resource configuration and assignment.

The device 104a may have more associated devices 104, 104b as a cluster member than there are resources in the resource configuration, whereupon it can multiplex the resources to the devices 104, 104b by means of the resource assignments. Thus, the device 104a informs the resource assignment to all devices 104, 104b in the cluster by using several beacons. The device 104a divides, by means of its controller 424, the devices 104, 104b of the cluster into at least two device groups. Each device group comprises at least one device 104, 104b.

Then, the device 104a determines, by means of its controller 424, a beacon or other broadcast message for each device group and includes, by means of its controller 424, the transmission resource assignment into all beacons as previously has been explained. Finally, the device 104a broadcasts sequentially, by means of its data transferer 426, the determined beacons with the resource assignment to the devices 104, 104b in the cluster, whereupon each device 104, 104a knows the received resource configuration and assignment.

The device 104a may broadcast the resource assignment e.g. to the first one of device groups receives in every other beacon and to the second one of device groups in every other beacon.

The multiplexing of dedicated resources by means of the previously explained grouping enables to schedule resources to a larger amount of devices 104, 104b than it its possible with the resource tags.

Fig. 4 presents a device 104, 104a, 104b that is able to communicate in the network 102 and to perform the previously explained features (steps) of scheduling method.

The device 104, 104a, 104b comprises the controller (control part) 424 that con-trols operations of its parts 426, 432, 448, 450, 452 so that the device 104, 104a, 104b operates as explained in the context of previous figures.

The controller 424 comprises a processor (processor part) 448 that performs operator-initiated and/or computer program-initiated instructions, and processes data in order to run applications. The processor 448 may comprise at least one pro-cessor, e.g. one, two, three, or more processors.

The controller 424 also comprises the memory (memory part) 432 in order to store and to maintain data. The data may be instructions, computer programs, and data files. The memory 432 comprises at least one memory, e.g. one, two, three, or more memories.

The device 104, 104a, 104b also comprises the data transferer (data transfer part) 426 and an antenna (antenna part) 450 that the controller 424 uses in order to send commands, requests, and data to at least one of entities in the system 100, e.g. devices 104, 104, 104b, via the antenna 450. The data transferer 426 also receives commands, requests, and data from at least one of entities in the system 100, e.g. e.g. devices 104, 104, 104b, via the antenna. The communication between the data transferer 426 of device 104, 104, 104b and other entities in the system 100 is provided through the antenna 450 wirelessly.

The device 104, 104a, 104b also comprises a power supply (power supply part) 452. The power supply 452 comprises components for powering the device 104, 104a, 104b, e.g. a battery and a regulator.

The memory 432 stores at least a data transfer application 454 for operating (controlling) the data transferer 426, an antenna application 456 for operating the antenna 450, and a power supply application 458 for operating the power supply 452.

The memory 432 also stores a computer program (computer software, computer application) 460, which uses at least one of parts 426, 448, 450, 452 in order to perform at least the operations of device 104, 104a, 104b explained previously in this description and figures, when it is run in a computer, e.g. in the device 104, 104a, 104b, by means of the controller 424.

The computer program 460 may be stored in a tangible, non-volatile computer-readable storage medium, e.g. a Compact Disc (CD) or Universal Serial Bus (USB) -type storage device.

The invention and its several advantages have been now explained with reference to the above-mentioned embodiments. It is clear that the invention is not only restricted to these embodiments but it comprises all possible embodiments within the scope of following claims.

## Claims

1. A resource scheduling system (100) for a wireless communication network (102), comprising
a first communication device (104a) and
a second communication device (104b),
wherein the first communication device and the second communication device belong to a group of a plurality of communication devices (104, 104a, 104b) of the network and
wherein each communication device (104, 104a, 104b) in the group of the plurality of the communication devices is configured to provide a bi-directional radio communication with at least one other of the plurality of the communication devices,
**characterized in that** the first communication device is configured to send a transmission resource configuration as a part of a response to an association request of the second communication device, which belongs to the plurality of the communication devices, and to broadcast a transmission resource assignment separately from the transmission resource configuration to the rest of the plurality of the communication devices, wherein the transmission resource configuration comprises transmission resource allocation information, which informs an allocation of resources, and the transmission resource assignment comprises assignment information, which informs which part of the resources is assigned to which communication device (104, 104a, 104b) in the group of the plurality of the communication devices.

2. The system according to claim 1, wherein the transmission resource configuration is a part of an association acknowledged response, which completes the association between the first and second communication devices.

3. The system according to claim 1, wherein the first communication device broadcasts the transmission resource configuration to the plurality of the communication devices when the transmission resource configuration has changed during an existing association with the plurality of the communication devices.

4. The system according to any of the previous claims, wherein the transmission resource configuration comprises at least timings of the resources and at least one frequency channel of the resources, or the transmission resource configuration comprises at least the timings of the resources, the at least one channel of the resources, and an amount of the resources.

5. The system according to any of the previous claims, wherein the first communication device broadcasts the transmission resource assignment as a part of a beacon.

6. The system according to any of the previous claims, wherein the transmission resource assignment further comprises direction information, which indicates whether an assigned resource part is for a communication in an uplink direction or a downlink direction.

7. The system according to any of the previous claims, wherein, if the first communication device is unable to inform the transmission resource assignment in a single message to all of the plurality of the communication devices, the first communication device divides the group of the plurality of the communication devices into at least two device groups and broadcasts sequentially the transmission resource assignment of each device group to the plurality of the communication devices.

8. The system according to any of the previous claims, wherein the first communication device observes an amount of messages sent by each communication device (104, 104a, 104b) in the group of the plurality of the communication devices or the first communication device is able to receive an additional resource request from one communication device (104, 104b), which belongs to the group of the plurality of the communication devices, in order to determine a resource need of the each communication device or at least one unused resource, and changes the transmission resource configuration, if the observation or the received additional resource request indicates such need.

9. The system according to any of the previous claims, wherein the network is a Digital European Cordless Telecommunication 2020 -based network, a wireless mesh network, a wireless Bluetooth Low Energy -based radio network, a wireless local area network, Thread network, Zigbee network, Public Land Mobile Network, or cellular network.

10. The system according to any of the previous claims, wherein, when the network is a wireless mesh network, the group of plurality of communication devices forms a cluster, the first communication device operates as a cluster head (104a) of the cluster, which schedules and assigns resources for cluster members (104, 104b) of the cluster, and the second communication device is one of the cluster members.

11. A resource scheduling method for a wireless communication network (102), comprising following steps of
presenting at least a first communication device (104a) and a second communication device (104b) belonging to a group of a plurality of communication devices (104, 104a, 104b) of the network and
providing, by each communication device (104, 104a, 104b) in the group of the plurality of the communication devices, a bi-directional radio communication with at least one other of the plurality of the communication devices,
**characterized in that** the first communication device sends a transmission resource configuration as a part of a response to an association request of the second communication device, which belongs to the plurality of the communication devices, and broadcasts a transmission resource assignment separately from the transmission resource configuration to the rest of the plurality of the communication devices, wherein the transmission resource configuration comprises transmission resource allocation information, which informs an allocation of resources, and the transmission resource assignment comprises assignment information, which informs which part of the resources is assigned to which communication device (104, 104a, 104b) in the group of the plurality of the communication devices.

12. A wireless communication device (104a), comprising
a controller (424) and
a data transferer (426),
wherein the controller is configured to present a group of a plurality of wireless communication devices (104, 104a, 104b) in a wireless communication network (102) and
wherein the data transferer is configured to provide a bi-directional radio communication with at least one other wireless communication device (104, 104b) belonging to the group of the plurality of the communication devices,
**characterized in that** the data transferer is configured to send a transmission resource configuration as a part of a response to an association request of other communication device (104b), which belongs to the the plurality of the communication devices, and to broadcast a transmission resource assignment separately from the transmission resource configuration to the rest of the plurality of the communication devices in order to schedule resources in the network, wherein the transmission resource configuration comprises transmission resource allocation information, which informs an allocation of resources, and the transmission resource assignment comprises assignment information, which informs which part of the resources is assigned to which communication device (104, 104a, 104b) in the group of the plurality of the communication devices.

13. A resource scheduling method for a wireless communication device (104a), comprising following steps of
presenting, by a controller (424) of the communication device, a group of a plurality of wireless communication devices (104, 104a, 104b) in a wireless communication network (102) and
providing, by a data transferer (426) of the communication device, a bi-directional radio communication with at least one other wireless communication device (104, 104b) belonging to the group of plurality of the communication devices,
**characterized in that** the data transferer sends a transmission resource configuration as a part of a response to an association request of other communication device (104b), which belongs to the plurality of the communication devices, and broadcasts a transmission resource assignment separately from the transmission resource configuration to the rest of the plurality of the communication devices in order to schedule resources in the network, wherein the transmission resource configuration comprises transmission resource allocation information, which informs an allocation of resources, and the transmission resource assignment comprises assignment information, which informs which part of the resources is assigned to which communication device (104, 104a, 104b) in the group of the plurality of the communication devices.

14. A computer program (460) comprising instructions, which, when the computer program is executed by a computer, cause the computer to carry out at least the steps of the method according to claim 13.

15. A tangible, non-volatile computer readable medium comprising the computer program (460) according to claim 14.

## Patentansprüche

1. Ressourcenplanungssystem (100) für ein drahtloses Kommunikationsnetzwerk (102), umfassend
eine erste Kommunikationsvorrichtung (104a) und
eine zweite Kommunikationsvorrichtung (104b),
wobei die erste Kommunikationsvorrichtung und die zweite Kommunikationsvorrichtung zu einer Gruppe einer Vielzahl von Kommunikationsvorrichtungen (104, 104a, 104b) des Netzwerks gehören und
wobei jede Kommunikationsvorrichtung (104, 104a, 104b) in der Gruppe der mehreren Kommunikationsvorrichtungen konfiguriert ist, um eine bidirektionale Funkverbindung mit mindestens einer anderen der mehreren Kommunikationsvorrichtungen bereitzustellen,
**dadurch gekennzeichnet, dass** die erste Kommunikationsvorrichtung konfiguriert ist, um eine Übertragungsressourcenkonfiguration als Teil einer Antwort auf eine Assoziationsanfrage der zweiten Kommunikationsvorrichtung zu senden, die zu der Vielzahl der Kommunikationsvorrichtungen gehört, und um eine Übertragungsressourcenzuweisung getrennt von der Übertragungsressourcenkonfiguration an den Rest der Vielzahl der Kommunikationsvorrichtungen zu senden, wobei die Übertragungsressourcenkonfiguration Übertragungsressourcenzuweisungsinformationen umfasst, die über eine Ressourcenzuweisung informieren, und die Übertragungsressourcenzuweisung Zuweisungsinformationen umfasst, die darüber informieren, welcher Teil der Ressourcen welcher Kommunikationsvorrichtung (104, 104a, 104b) in der Gruppe der Vielzahl der Kommunikationsvorrichtungen zugewiesen ist.

2. System nach Anspruch 1, wobei die Übertragungsressourcenkonfiguration ein Teil einer Assoziationsbestätigungsantwort ist, die die Asoziation zwischen der ersten und der zweiten Kommunikationsvorrichtung vervollständigt.

3. System nach Anspruch 1, wobei die erste Kommunikationsvorrichtung die Übertragungsressourcenkonfiguration an die Vielzahl der Kommunikationsvorrichtungen sendet, wenn sich die Übertragungsressourcenkonfiguration während einer bestehenden Verbindung mit der Vielzahl der Kommunikationsvorrichtungen geändert hat.

4. System nach einem der vorstehenden Ansprüche, wobei die Übertragungsressourcenkonfiguration mindestens die Zeitpunkte der Ressourcen und mindestens einen Frequenzkanal der Ressourcen umfasst, oder die Übertragungsressourcenkonfiguration mindestens die Zeitpunkte der Ressourcen, den mindestens einen Kanal der Ressourcen und eine Menge der Ressourcen umfasst.

5. System nach einem der vorstehenden Ansprüche, wobei die erste Kommunikationsvorrichtung die Übertragungsressourcenzuweisung als Teil einer Bake sendet.

6. System nach einem der vorstehenden Ansprüche, wobei die Übertragungsressourcenzuweisung ferner Richtungsinformationen umfasst, die angeben, ob ein zugewiesener Ressourcenteil für eine Kommunikation in einer Uplink-Richtung oder einer Downlink-Richtung vorgesehen ist.

7. System nach einem der vorstehenden Ansprüche, wobei, wenn die erste Kommunikationsvorrichtung nicht in der Lage ist, die Übertragungsressourcenzuweisung in einer einzigen Nachricht an alle der Vielzahl der Kommunikationsvorrichtungen zu übermitteln, die erste Kommunikationsvorrichtung die Gruppe der Vielzahl der Kommunikationsvorrichtungen in mindestens zwei Vorrichtungsgruppen unterteilt und die Übertragungsressourcenzuweisung jeder Vorrichtungsgruppe nacheinander an die Vielzahl der Kommunikationsvorrichtungen sendet.

8. System nach einem der vorstehenden Ansprüche, wobei die erste Kommunikationsvorrichtung eine Menge von Nachrichten beobachtet, die von jeder Kommunikationsvorrichtung (104, 104a, 104b) in der Gruppe der Vielzahl der Kommunikationsvorrichtungen gesendet werden, oder die erste Kommunikationsvorrichtung in der Lage ist, eine zusätzliche Ressourcenanfrage von einer Kommunikationsvorrichtung (104, 104b) zu empfangen, die zu der Gruppe der Vielzahl der Kommunikationsvorrichtungen gehört, um einen Ressourcenbedarf der jeweiligen Kommunikationsvorrichtung oder mindestens eine ungenutzte Ressource zu bestimmen, und die Übertragungsressourcenkonfiguration ändert, wenn die Beobachtung oder die empfangene zusätzliche Ressourcenanfrage einen solchen Bedarf anzeigt.

9. System nach einem der vorstehenden Ansprüche, wobei das Netzwerk ein auf Digital European Cordless Telecommunication 2020 basierendes Netzwerk, ein drahtloses Mesh-Netzwerk, ein drahtloses Bluetooth Low Energy-basiertes Funknetzwerk, ein drahtloses lokales Netzwerk, ein Thread-Netzwerk, ein Zigbee-Netzwerk, ein öffentliches Mobilfunknetzwerk oder ein zellulares Netzwerk ist.

10. System nach einem der vorstehenden Ansprüche, wobei, wenn es sich bei dem Netzwerk um ein drahtloses Mesh-Netzwerk handelt, die Gruppe von mehreren Kommunikationsvorrichtungen einen Cluster bildet, die erste Kommunikationsvorrichtung als Clusterkopf (104a) des Clusters arbeitet, der die Ressourcen für die Clusterelemente (104, 104b) des Clusters plant und zuweist, und die zweite Kommunikationsvorrichtung eines der Clusterelemente ist.

11. Ressourcenplanungsverfahren für ein drahtloses Kommunikationsnetzwerk (102), umfassend die folgenden Schritte
Darstellen mindestens einer ersten Kommunikationsvorrichtung (104a) und einer zweiten Kommunikationsvorrichtung (104b), die zu einer Gruppe einer Vielzahl von Kommunikationsvorrichtungen (104, 104a, 104b) des Netzwerks gehören, und
Bereitstellen einer bidirektionalen Funkverbindung durch jede Kommunikationsvorrichtung (104, 104a, 104b) in der Gruppe der Vielzahl der Kommunikationsvorrichtungen mit mindestens einer anderen der Vielzahl der Kommunikationsvorrichtungen,
**dadurch gekennzeichnet, dass** die erste Kommunikationsvorrichtung eine Übertragungsressourcenkonfiguration als Teil einer Antwort auf eine Assoziationsanfrage der zweiten Kommunikationsvorrichtung, die zu der Vielzahl der Kommunikationsvorrichtungen gehört, sendet und eine Übertragungsressourcenzuweisung getrennt von der Übertragungsressourcenkonfiguration an den Rest der Vielzahl der Kommunikationsvorrichtungen sendet, wobei die Übertragungsressourcenkonfiguration Übertragungsressourcenzuweisungsinformationen umfasst, die über eine Zuweisung von Ressourcen informieren, und die Übertragungsressourcenzuweisung Zuweisungsinformationen umfasst, die darüber informieren, welcher Teil der Ressourcen welcher Kommunikationsvorrichtung (104, 104a, 104b) in der Gruppe der Vielzahl der Kommunikationsvorrichtungen zugewiesen ist.

12. Drahtlose Kommunikationsvorrichtung (104a), umfassend
eine Steuerung (424) und
einen Datenübermittler (426),
wobei die Steuerung konfiguriert ist, um eine Gruppe einer Vielzahl von drahtlosen Kommunikationsvorrichtungen (104, 104a, 104b) in einem drahtlosen Kommunikationsnetzwerk (102) zu präsentieren und
wobei der Datenübermittler konfiguriert ist, um eine bidirektionale Funkkommunikation mit mindestens einer anderen drahtlosen Kommunikationsvorrichtung (104, 104b) bereitzustellen, die zu der Gruppe der Vielzahl der Kommunikationsvorrichtungen gehört,
**dadurch gekennzeichnet, dass** der Datenübermittler konfiguriert ist, um eine Übertragungsressourcenkonfiguration als Teil einer Antwort auf eine Assoziationsanfrage einer anderen Kommunikationsvorrichtung (104b) zu senden, die zu der Vielzahl der Kommunikationsvorrichtungen gehört, und um eine Übertragungsressourcenzuweisung getrennt von der Übertragungsressourcenkonfiguration an den Rest der Vielzahl der Kommunikationsvorrichtungen zu senden, um Ressourcen in dem Netzwerk zu planen, wobei die Übertragungsressourcenkonfiguration Übertragungsressourcenzuweisungsinformationen umfasst, die über eine Zuweisung von Ressourcen informieren, und die Übertragungsressourcenzuweisung Zuweisungsinformationen umfasst, die darüber informieren, welcher Teil der Ressourcen welcher Kommunikationsvorrichtung (104, 104a, 104b) in der Gruppe der Vielzahl der Kommunikationsvorrichtungen zugewiesen ist.

13. Ressourcenplanungsverfahren für eine drahtlose Kommunikationsvorrichtung (104a), umfassend die folgenden Schritte
Darstellen, durch eine Steuerung (424) der Kommunikationsvorrichtung, einer Gruppe einer Vielzahl von drahtlosen Kommunikationsvorrichtungen (104, 104a, 104b) in einem drahtlosen Kommunikationsnetzwerk (102) und
Bereitstellen einer bidirektionalen Funkverbindung mit mindestens einer anderen drahtlosen Kommunikationsvorrichtung (104, 104b), die zu der Gruppe von mehreren Kommunikationsvorrichtungen gehört, durch einen Datenübermittler (426) der Kommunikationsvorrichtung,
**dadurch gekennzeichnet, dass** der Datenübermittler eine Übertragungsressourcenkonfiguration als Teil einer Antwort auf eine Assoziationsanfrage einer anderen Kommunikationsvorrichtung (104b) sendet, die zu der Vielzahl der Kommunikationsvorrichtungen gehört, und eine Übertragungsressourcenzuweisung getrennt von der Übertragungsressourcenkonfiguration an den Rest der Vielzahl der Kommunikationsvorrichtungen sendet, um Ressourcen im Netzwerk zu planen, wobei die Übertragungsressourcenkonfiguration Übertragungsressourcenzuweisungsinformationen umfasst, die über eine Zuweisung von Ressourcen informieren, und die Übertragungsressourcenzuweisung Zuweisungsinformationen umfasst, die darüber informieren, welcher Teil der Ressourcen welcher Kommunikationsvorrichtung (104, 104a, 104b) in der Gruppe der Vielzahl der Kommunikationsvorrichtungen zugewiesen ist.

14. Computerprogramm (460), umfassend Anweisungen, die, wenn das Computerprogramm von einem Computer ausgeführt wird, den Computer veranlassen, mindestens die Schritte des Verfahrens nach Anspruch 13 auszuführen.

15. Greifbares, nichtflüchtiges computerlesbares Medium, umfassend das Computerprogramm (460) nach Anspruch 14.

## Revendications

1. Système de planification de ressources (100) pour un réseau de communication sans fil (102), comprenant
un premier dispositif de communication (104a) et
un second dispositif de communication (104b),
dans lequel le premier dispositif de communication et le second dispositif de communication appartiennent à un groupe d'une pluralité de dispositifs de communication (104, 104a, 104b) du réseau et
dans lequel chaque dispositif de communication (104, 104a, 104b) dans le groupe de la pluralité des dispositifs de communication est configuré pour fournir une communication radio bidirectionnelle avec au moins un autre de la pluralité des dispositifs de communication,
**caractérisé en ce que** le premier dispositif de communication est configuré pour envoyer une configuration de ressources de transmission en tant que partie d'une réponse à une demande d'association du second dispositif de communication, qui appartient à la pluralité des dispositifs de communication, et pour diffuser une attribution de ressources de transmission séparément de la configuration de ressources de transmission au reste de la pluralité des dispositifs de communication, dans lequel la configuration de ressources de transmission comprend des informations d'attribution de ressources de transmission, qui informent une attribution de ressources, et l'attribution de ressources de transmission comprend des informations d'attribution, qui informent quelle partie des ressources est attribuée à quel dispositif de communication (104, 104a, 104b) dans le groupe de la pluralité des dispositifs de communication.

2. Système selon la revendication 1, dans lequel la configuration de ressources de transmission fait partie d'une réponse d'accusé de réception d'association, qui complète l'association entre les premier et second dispositifs de communication.

3. Système selon la revendication 1, dans lequel le premier dispositif de communication diffuse la configuration de ressources de transmission à la pluralité des dispositifs de communication lorsque la configuration de ressources de transmission a changé au cours d'une association existante avec la pluralité des dispositifs de communication.

4. Système selon l'une quelconque des revendications précédentes, dans lequel la configuration de ressources de transmission comprend au moins des temporisations des ressources et au moins un canal de fréquence des ressources, ou la configuration de ressources de transmission comprend au moins les temporisations des ressources, l'au moins un canal des ressources et une quantité des ressources.

5. Système selon l'une quelconque des revendications précédentes, dans lequel le premier dispositif de communication diffuse l'attribution de ressources de transmission en tant que partie d'une balise.

6. Système selon l'une quelconque des revendications précédentes, dans lequel l'attribution de ressources de transmission comprend en outre des informations de direction, qui indiquent si une partie de ressources attribuée est destinée à une communication dans une direction de liaison montante ou une direction de liaison descendante.

7. Système selon l'une quelconque des revendications précédentes, dans lequel, si le premier dispositif de communication n'est pas en mesure d'informer l'attribution de ressources de transmission dans un seul message à l'ensemble de la pluralité des dispositifs de communication, le premier dispositif de communication divise le groupe de la pluralité des dispositifs de communication en au moins deux groupes de dispositifs et diffuse séquentiellement l'attribution de ressources de transmission de chaque groupe de dispositifs à la pluralité des dispositifs de communication.

8. Système selon l'une quelconque des revendications précédentes, dans lequel le premier dispositif de communication observe une quantité de messages envoyés par chaque dispositif de communication (104, 104a, 104b) dans le groupe de la pluralité des dispositifs de communication ou le premier dispositif de communication est capable de recevoir une demande de ressources supplémentaire d'un dispositif de communication (104, 104b), qui appartient au groupe de la pluralité des dispositifs de communication, afin de déterminer un besoin de ressources de chaque dispositif de communication ou au moins une ressource inutilisée, et change la configuration de ressources de transmission, si l'observation ou la demande de ressources supplémentaire reçue indique un tel besoin.

9. Système selon l'une quelconque des revendications précédentes, dans lequel le réseau est un réseau basé sur Digital European Cordless Telecommunication 2020, un réseau maillé sans fil, un réseau radio sans fil Bluetooth à faible énergie, un réseau local sans fil, un réseau de fils, un réseau Zigbee, un réseau mobile terrestre public ou un réseau cellulaire.

10. Système selon l'une quelconque des revendications précédentes, dans lequel, lorsque le réseau est un réseau maillé sans fil, le groupe de la pluralité de dispositifs de communication forme un groupe, le premier dispositif de communication fonctionne comme une tête de groupe (104a) du groupe, qui planifie et attribue des ressources aux membres de groupe (104, 104b) du groupe, et le second dispositif de communication est l'un des membres du groupe.

11. Procédé de planification de ressources pour un réseau de communication sans fil (102), comprenant les étapes suivantes
de présentation d'au moins un premier dispositif de communication (104a) et un second dispositif de communication (104b) appartenant à un groupe d'une pluralité de dispositifs de communication (104, 104a, 104b) du réseau et
de fourniture, par chaque dispositif de communication (104, 104a, 104b) du groupe de la pluralité des dispositifs de communication, d'une communication radio bidirectionnelle avec au moins un autre dispositif de la pluralité des dispositifs de communication,
**caractérisé en ce que** le premier dispositif de communication envoie une configuration de ressources de transmission en tant que partie d'une réponse à une demande d'association du second dispositif de communication, qui appartient à la pluralité des dispositifs de communication, et diffuse une attribution de ressources de transmission séparément de la configuration de ressources de transmission au reste de la pluralité des dispositifs de communication, dans lequel la configuration de ressources de transmission comprend des informations d'attribution de ressources de transmission, qui informent d'une attribution de ressources, et l'attribution de ressources de transmission comprend des informations d'attribution, qui informent quelle partie des ressources est attribuée à quel dispositif de communication (104, 104a, 104b) dans le groupe de la pluralité des dispositifs de communication.

12. Dispositif de communication sans fil (104a), comprenant
un dispositif de commande (424) et
un dispositif de transfert de données (426),
dans lequel le dispositif de commande est configuré pour présenter un groupe d'une pluralité de dispositifs de communication sans fil (104, 104a, 104b) dans un réseau de communication sans fil (102) et
dans lequel le dispositif de transfert de données est configuré pour fournir une communication radio bidirectionnelle avec au moins un autre dispositif de communication sans fil (104, 104b) appartenant au groupe de la pluralité des dispositifs de communication,
**caractérisé en ce que** le dispositif de transfert de données est configuré pour envoyer une configuration de ressources de transmission en tant que partie d'une réponse à une demande d'association d'un autre dispositif de communication (104b), qui appartient à la pluralité des dispositifs de communication, et pour diffuser une attribution de ressources de transmission séparément de la configuration de ressources de transmission au reste de la pluralité des dispositifs de communication afin de planifier des ressources dans le réseau, dans lequel la configuration de ressources de transmission comprend des informations d'attribution de ressources de transmission, qui informent d'une attribution de ressources, et l'attribution de ressources de transmission comprend des informations d'attribution, qui informent quelle partie des ressources est attribuée à quel dispositif de communication (104, 104a, 104b) dans le groupe de la pluralité des dispositifs de communication.

13. Procédé de planification de ressources pour un dispositif de communication sans fil (104a), comprenant les étapes suivantes
de présentation, par un dispositif de commande (424) du dispositif de communication, d'un groupe d'une pluralité de dispositifs de communication sans fil (104, 104a, 104b) dans un réseau de communication sans fil (102) et
de fourniture, par un dispositif de transfert de données (426) du dispositif de communication, d'une communication radio bidirectionnelle avec au moins un autre dispositif de communication sans fil (104, 104b) appartenant au groupe de le pluralité des dispositifs de communication,
**caractérisé en ce que** le dispositif de transfert de données envoie une configuration de ressources de transmission en tant que partie d'une réponse à une demande d'association d'un autre dispositif de communication (104b), qui appartient à la pluralité des dispositifs de communication, et diffuse une attribution de ressources de transmission séparément de la configuration de ressources de transmission au reste de la pluralité des dispositifs de communication afin de planifier des ressources dans le réseau, dans lequel la configuration de ressources de transmission comprend des informations d'attribution de ressources de transmission, qui informent d'une attribution de ressources, et l'attribution de ressources de transmission comprend des informations d'attribution, qui informent quelle partie des ressources est attribuée à quel dispositif de communication (104, 104a, 104b) dans le groupe de la pluralité des dispositifs de communication.

14. Programme informatique (460) comprenant des instructions qui, lorsque le programme informatique est exécuté par un ordinateur, amènent l'ordinateur à exécuter au moins les étapes du procédé selon la revendication 13.

15. Support tangible, non volatil, lisible par ordinateur comprenant le programme informatique (460) selon la revendication 14.
